Europäisches Patentamt

European Patent Office

Office européen des brevets

(19)

(11) Publication number: **0 193 846**

**A2**

(12) **EUROPEAN PATENT APPLICATION**

(21) Application number: **86102439.6**

(22) Date of filing: **25.02.86**

(51) Int. Cl.⁴: **B29C 67/14** , B29B 11/16 ,
//B29K95:00,B29K105:08

(30) Priority: **25.02.85 IT 1963785**

(43) Date of publication of application:
**10.09.86 Bulletin 86/37**

(84) Designated Contracting States:
**AT BE CH DE FR GB LI NL SE**

(71) Applicant: **VITROFIL SpA**
**31 Foro Buonaparte**
**Milan(IT)**

(72) Inventor: **Tettamanzi, Natale**
**66/1, via SS Giacomoe Filippo**
**I-17015 Celle Ligure Savor(IT)**

(74) Representative: **Weinhold, Peter, Dr. et al**
**Patentanwälte Dr. V. Schmied-Kowarzik Dipl.-Ing. G.**
**Dannenberg Dr. P. Weinhold Dr. D. Gudel Dipl.-Ing.**
**S. Schubert Dr. P. Barz Siegfriedstrasse 8**
**D-8000 München 40(DE)**

(54) **Process for the preparation of impermeabilizing membranes with a glass filament reinforcing structure.**

(57) There is described a preparation of impermeabilizing membranes (in particular with an impermeabilizing matrix of a bituminous type) provided with a glass filament reinforcement, following the hereunder indicated procedures:

(a) preparation of a glass filament mat achieved by the deposition from above, on a surface in horizontal movement, and with a greater speed than the traverse speed of said surface, of sized glass filaments endowed with a spirallike dropping motion;

(b) deposition of impermeabilizing material in a liquid form on the mat, substantially impregnating the mat;

(c) solidification of the impermeabilizing material.

FIG. 1

# PROCESS FOR THE PREPARATION OF IMPERMEABILIZING MEMBRANES WITH A GLASS FILAMENT REINFORCING STRUCTURE

The present invention concerns a process for the preparation of impermeabilizing membranes endowed with an internal reinforcing structure of glass fibres.

The impermeabilizing membranes are products quite known in the Art. They consist of a mass of waterproof material and of an internal structure having the task of stabilizing mechanically the impermeabilizing masses. The impermeabilizing mass itself, in general, consists of polymers such as: polyvinyl chloride, polypropylene, etc., or, and this is the greater part, of polymers such as polypropylene, SBS, modified with oxidized bitumen. Because of the great importance these membranes have on the market, we shall, in the following, consider the applications this new product may have in the manufacture of said membranes.

The reinforcing structures consist of non-woven fabrics such as felt board, of non-woven glass fibre fabrics, of organic fibres, both natural, such as jute, as well as of synthetic fibres such as polyesters, of fabrics of fibres of the cited type, and so on. A characteristic common to all these materials is that they have always a reduced thickness with respect to the final thickness of the membrane, and that there is no bond to the impermeabilizing mass to form an integrated material.

Also known are the 'delamination' phenomena at low temperature whereby, at 240°K it is almost always possible to separate and uncover the reinforcing structure, although in the case of elastomeric polymers it is sometimes necessary, although seldom, to go down to 210°K. This situation is due to the fact that there does not exist a strong bond between the materials and that the reinforcing structure represents a separating layer which at higher temperatures is not so easily observable because of the reduced coherence of the impermeabilizing mix. Moreover, due to the reduced thickness of the weave, also in the simple case in which it consists of only one layer rather than of a plurality of layers of homogeneous or different materials, there arises the problem of where to position said weave, e.g. on the neutral axis of the product, on the surface or in the intermediate positions. A further drawback results from technological factors: a weave of considerable thickness, with respect to that of the finished impermeabilizing membrane, just because its constituent fibres are but limitedly wetted by the polymer of bituminous mass, are difficult to render impermeable. Nor, on the other hand, is it possible to use woven fabrics or very close nets, even more difficult to impregnate, or nets with thick weft and warp yarns which, even due to the strain occurring when the membrane is just wound up into reels, cut the membrane itself.

On the other hand, it is known that the introduction into the impermeabilizing mass of fibrous reinforcements consisting of short fibres known as "chopped filaments", when inorganic, or "staples" when organic, involves a rise of the viscosity to such a high degree, that their presence is limited to so low percentages to reduce the reinforcing and stabilizing effect to perceivable values if not to an altogether negligible level.

The elimination of all these drawbacks and of still other difficulties not mentioned herein, but well known to the skilled in the Art, besides a substantial improvement consisting in obtaining a product in which the weave is diffused an uniformely distributed in the impermeabilizing membrane, is the object of this invention.

Said object is achieved by carrying out the preparation process of the impermeabilizing membranes following, in the given order, the following procedures:

1) formation of the mat of glass filaments, obtained by the deposition from above of suitably sized glass fibres of either continuous or finite length, in the form of a spiral, on a surface or conveyor belt in horizontal movement and having a traverse speed lower than the filament deposition speed.

2) deposition on said mat of the impermeabilizing material in a fluid state substantially impermeabilizing said mat by the mentioned material;

3) solidification of the impermeabilizing material.

According to a different embodiment of this process, the formation of the mat according to operation (1) is carried out by depositing glass filaments onto a layer of fluid impermeabilizing material, preformed on the conveyor belt.

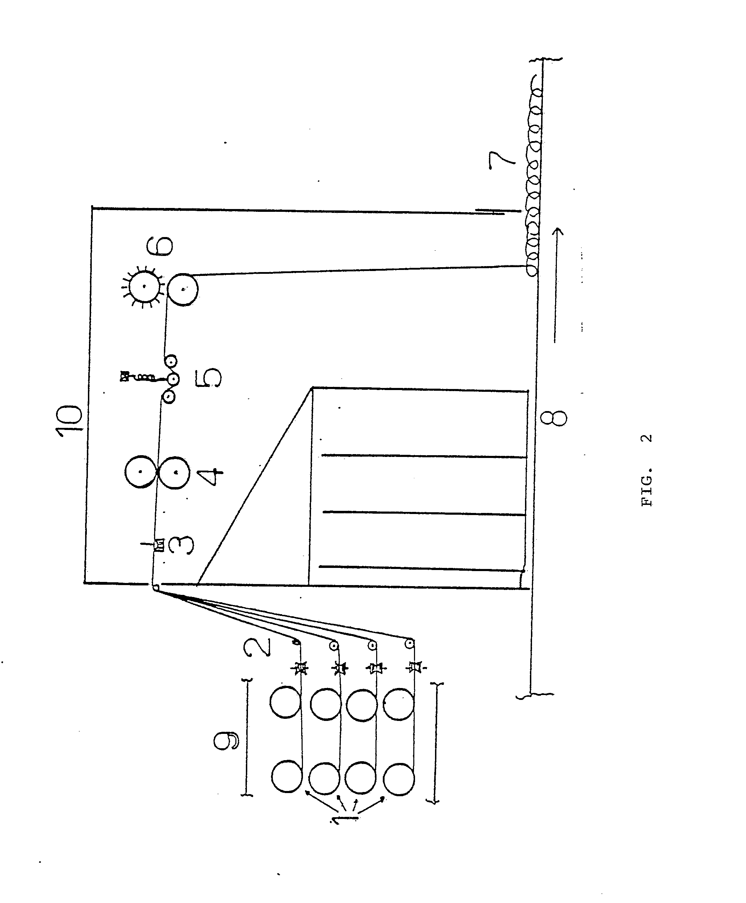

The deposition of glass filaments in the form of a spiral, according to operation (1) is realized by exploiting the relaxation of the tensile force arising in a yarn and caused by the unwinding operation of the yarn from the inside of cops kept still. A similar device to that schematically shown in Fig. 2 allows to unwind cops 1 arranged on creels 9, conveying the yarn through devices 3, 4 and 5 to the pair of cylinders 6.

If the blade-carrying roller is replaced by a smooth surface roller, the filament passes through the pair of cylinders 6 then freely dropping upon the conveyer belt 7. In the dropping stretch the twists induced by the unwinding, relax themselves, imparting to the filament a circular motion which gradually grows as it gets away from the pair of cylinders 6. Since the speed of the filament is greater than the traverse speed of conveyor 8, the filament will deposit on this latter in the form of a spiral or, since there is a plurality of filaments, of superimposed spirals interlacing with each other, thereby giving place to a mat.

The sizes or dressings with which the glass filaments are treated in order to form the mat, are applied in general, in the spinning phase and, thus, cover uniformly the single fibre of elementary staple. They must be adjusted in order to obtain the best possible wettability of the glass by the polymer or polymers which constitute the impermeabilizing mix. It is therefore possible to use for each polymer or for each family of polymers the most suited size formulation. Moreover, in the technology of production of the glass-based filaments the size to gather filament and filament - (staple and staple) is known. These accumulations favour the penetration of the polymer just at the points of greatest difficulty, the mutual position of the single filaments remaining however unaltered.

The sizes should be adjusted in every case, when one wants to obtain best results, as a function of the polymer. In the case of plastomeric impermeabilizing mixes, in the practice based on atactic polypropylene, sometimes with small admixtures of crystalline polymer in order to vary its rigidity or stiffness, there may be used formulations containing isotactic carboxylated polypropylene, amorphous-carboxylated polypropylene, a base, a possibly cationic surfactant agent and water, not forgetting the bridge-forming agents such as silanes.

Just for exemplifying purposes, it should be mentioned that the sizes descirbed in USA Patent No. 3.882.068 and French Pat. No. 800.2.977 may be used.

In the case of elastomeric mixes, for instance, based on SBS resins, a size based on styrene polymers may conveniently be used.

The impermeabilizing material which deposits itself upon the mat, according to operation (2) may be fluidized by means of heat when thermoplastic material, or bitumen or mixtures thereof are involved, otherwise it may already be in the fluid form at the temperature of use when for example, polymers in the form of sols are used, as in the case of polyvinyl chloride.

In general, as impermeabilizing polymeric materials there are used polyisobutylenic and isoprenic copolymers, vulcanized chloroprenic rubbers, partially vulcanized chlorosulphonated polyethylene, vulcanized nitrilic rubbers, ethylenevinyl copolymers, polyethylene chloride, polyvinyl chloride, polyvinyl fluoride, mixes of oxidized bitumen with styrene-butadiene rubbers, mixes of oxidized bitumen with isoprene, mixes of oxidized bitumen with atactic polypropylene, etc.

After its depositions onto the mat, the fluid impermeabilizing material preferably flows along the base filaments and, thus, is easily diffused throughout the whole volume of the mat.

It is clear that this action may conveniently be accelerated by applying, for instance, a pressure or other known means. The same methods may be adopted in order to adjust the thickness of the manufactured article, though it should be clear that the greatest attention must be paid in order not to lose the distribution homogeneity in the manufactured article due to the thickness of the reinforcing base filaments.

The solidification of the impermeabilizing material may be achieved by cooling, in the case of material applied in the molten state, or by heating it up, in the case, for instance, of material used in the form of a solution or a sol.

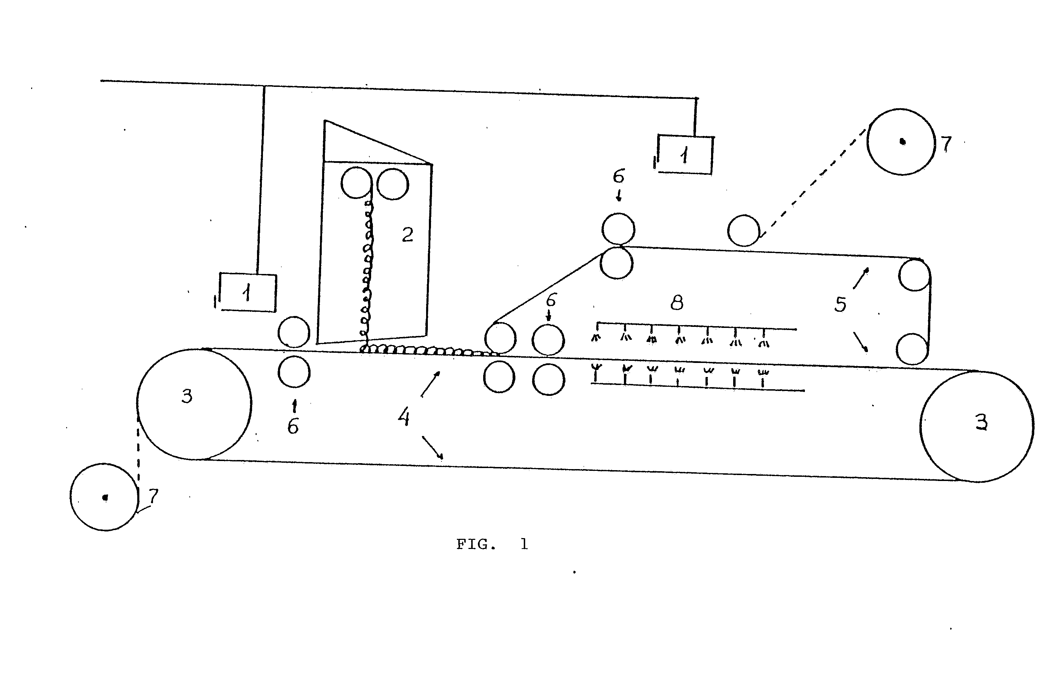

Fig. 1 represents schematically one of the devices that may be used for realizing this new type of impermeabilizing membranes, in praticular of the bituminous type, for which one disposes a cooling system, while for other impermeabilizing materials there would be necessary a heating system. ·

The illustrated device consists essentially of two continuous conveyor belts, marked by 4 and 5, respectively, and which are made of metal or of any material fit to endure continuous sudden thermal changes and from which the mix may be detached easily and it should not adhere to the belt. Proceeding from left to right on Fig. 1: on the lower conveyor belt 4, cooled by devices not shown in the drawing, and carried by two big cylinders 3, the dispenser 1 deposits a continuous gauged layer of bituminous mix.

The pair of calenders, or tapering device, 6 correct possible differences in thickness and bring the mix to the desired width. The continuous base filaments drop from the hood 2, described in more detail later on, and illustrated in Fig. 2, and deposit themselves on the first layer of bituminous mass and start to sink into the same.

Proceeding further, one arrives at the conveyor belt 5 on which a distributor 1 and a pair of tapering devices 6 deposite a second layer of impermeabilizing material. The mat of continuous glass fibres is now ideally positioned between two layers of impermeabilizing material which are diffusing and spreading towards the inside of the mat, helped by the approaching conveyor belts 4 and 5 as well as by the calenders 6.

At the outlet of the calenders 6 the product is practically completed and may now be cooled down, for instance, by means of a water bath, before being conveyed to the possible finishing stations for e. g. chalking, sandings (sand blastings), etc., whereafter it may be wound up.

In the case of the tests illustrated in the examples that follow hereunder, finished or end products are obtained by depositing an anti-adhesive layer, consisting, for instance, of a polyethylene film 7, on conveyor belt 4 and 5, or a layer of anti-adhesive powder on the mentioned conveyor belts, and so on.

The deposition system for the continuous filaments contained in hood 2, may be replaced with a cutting apparatus, wherefore it becomes possible to obtain cutup filaments (staples) arranged isotropically and with lengths up to 20 cm. A few modifications are possible to eventually further reduce the cutting length.

The pair of conveyor belts 4 and 5 may be shortened in such a way that after the last calendering operation the membrane enters a cooling system made of multi-level cooling vats, thereby solving a lot of operational problems for the running of the machine.

A further modification which would allow to eliminate possible conveyor belts or metal ribbons, consists of substituting the lower conveyor belt 4 with a non-woven fabrik belt, in particular of glass fibres for its dimensional stability, on which the continuous filament mat will drop. Dispenser 1 will then spill directly upon the mat and on the non-woven fabrik ribbon the mix in a quantity metered in such a way that after the passage through the tapering calenders 6 there will be obtained the finished product in just the desired thickness. Thereupon the product is conveyed to cooling with water.

Fig. 2 represents schematically the device for forming the continuous fibre mat, repeatedly mentioned before, supposing that the base filaments are wound on cops 1, arranged on creels 9. From there filaments 2, conveniently braked by means of known devices used for said purpose in the textile field, enter forming hood 10 where they meet a moving comb 3 which alternatively shifts their position under the dragging rollers 4. They then proceed to meet a tensioning device 5 and go on to the cutting or trimming device 6; in the latter the blade-carrying cylinder may be replaced by a bladeless cylinder.

The filaments then drop onto conveyor belt 8, their speed being adjustable, but always greater than that of conveyor belt 8, they will form a mat 7, with a variable thickness or mass per surface unit.

The material thus obtained shows a greater isotropism of the mechanical characteristics, in particular of the tensile resistance or strength measured on test pieces obtained transversally and longitudinally to the advancing motion of the machine.

Moreover, the quantity of reinforcing material, in particular of glass fibres, may be considerably increased with respect to that of the webs of the same material used usually.

Just to give an example, it has been possible to obtain, without reaching the limits of workability, contents of glass fibres of up to 500 g m$^{-2}$ for final thicknesses of the end product of 0.4 cm; of 400 g m$^{-2}$ for final thicknesses of 0.3 cm; of 250 g m$^{-2}$ for final thicknesses of 0.2 cm, using mixes based on isotactic polypropylene and oxidized bitumen in a ratio of 60-40% by weight.

The evaluation of the mechanical characteristics of the manufactured product was carried out according to the usual methods and, test pieces of 5 cm width, 30 cm long and of the characteristical thickness for this product were used.

In order to further illustrate this invention, the following examples are given, but in no respect they shall limit the inventive scope of the invention.

EXAMPLE 1:

Using the device illustrated by Fig. 1, onto the conveyor belt a 1-1.5 mm thick layer of a mix of 60% by weight of atactic polypropylene and of 40% by weight of oxidized bitumen was deposited, at a temperature of 190°C. On this layer there was formed a mat 3.5 mm thick, formed of continuous glass filaments with a titre of 50 tex, consisting of elementary filaments with a diameter of 15$\mu$, and previously treated with a size consisting of components similar to those previously mentioned.

The deposition of the filaments was carried out at an unwinding speed of about 0.63 m/sec, starting from 16 cops, while the conveyor belt advanced at a speed of 2 m/min.

Subsequently, on the thus formed mat, a second layer of the above said mix, having a thickness of 3-3.5 mm was deposited.

After cooling down, by means of spraying with water and subsequent immersion in running water in a 10 m long vat, there was obtained a membrane containing 250 g $m^{-2}$ of glass fibres. This membrane, with a thickness of 4 mm, was wound up into a roll of 10 meters development and 1 meter width.

From the membrane thus obtained 10 test pieces were taken, five in the longitudinal sense and 5 in the transversal sense, for each meter of development, following a predetermined sampling plan. On these test pieces the following mean values for the tensile at break strength at room temperature, were ascertained:

in the longitudinal sense: 146 daN/5 cm

in the transversal sense: 137 daN/5 cm.

EXAMPLE 2 :

Using the materials like those used in example 1, an impermeabilizing membrane was prepared in which the mass of glass per surface unit was increased up to about 350 g $m^{-2}$. After having sampled the same number of test pieces, from these the following tensile strength at break values were obtained:

in the longitudinal sense: 195 daN/5 cm

in the transversal sense: 188 daN/5 cm.

EXAMPLE 3:

Test pieces drawn from the impermeabilizing membrane obtained according to example 1, were brought up to 238°K.

Taken out of the thermostatic chamber, it was proceeded with the standard manipulations, in order to separate the impermeabilizing mix from the weave.

All attempts were useless since it was impossible to detach the mix from the base filaments, except for only fragments of small dimensions coming from the crumbling of the mix itself.

Moreover, using test pieces taken from the impermeabilizing membranes described in examples 1 and 2, there was determined the linear heat expansion coefficient in the temperature ranges of 293-273°K, 293-263°K, 293-253°K and 293-238°K.

The data found, which confirmed the characteristics of a high stability of the material, have been reported on the following table, wherein the product marked by 1 represents the membrane formed with 250 g $m^{-2}$ of glass fibres while the one marked by 2 is the membrane formed with 350 g $m^{-2}$ of glass fibres.

Linear Expansion Coefficient ($10^{-6}$°$K^{-1}$)

| Temperature ranges in °K | Product 1 | | Product 2 | |
|---|---|---|---|---|
| | longit. | transv. | longit. | transv. |
| 293 – 273 | 19 | 24 | 16 | 14 |
| 293 – 263 | 24 | 26 | 21 | 23 |
| 293 – 253 | 28 | 29 | 24 | 25 |
| 293 – 238 | 54 | 50 | 43 | 40 |

EXAMPLE 4:

On the same membranes as those of examples 1 and 2 the tear strength at break was determined according to the following procedures:

There were prepared 4 metal plates 300 mm long, 150 mm wide and 5 mm thick. On one of the 150 mm long sides of each plate a rod of 5 mm diameter was welded along the whole length.

Between one pair of plates a test piece 150 mm wide and 350 mm long was then fixed, so that at least 70 mm are left free and projecting beyond the rods which enclose said membrane test piece.

The second pair of plates, still with the rods facing the membrane, is fixed at 5 or 10 mm distance from the first one, parallel to it and engaging only 50 mm of the membrane.

The first pair of plates is then fixed on a horizontal plane so that the membrane and the second pair of plates be free to move: at the one end of the second pair of plates, not engaged by the membrane, forces tending to lift said membrane were applied.

With this equipment the following tear-strength at break values were found:

| | Product ex. 1 | | Prod. ex. 2 | | Reference | |
|---|---|---|---|---|---|---|
| | longit. | transv. | longit. | transv. | longit. | transv. |
| Test 1: | 24 | 24 | 39 | 38 | 12 | 7 |
| Test 2: | 32 | 32 | 44 | 44 | 16 | 14 |

The reference consists of an impermeabilizing membrane formed with the same type of mix but for a weave of a non-woven fabric of fibres of polyester resins of 120 g m$^{-2}$.

EXAMPLE 5:

Test pieces drawn from the same impermeabilizing membranes (defined type 1 and 2) were subjected to an aging period of 28 days in water kept at a temperature of 333°K, and subsequently submitted to a tensile stress. The influence of the glass surface in contact with the polymer of the impermeabilizing mass could be observed, and results from the following values which represent percentually the mechanical tensile characteristics in comparison with the untreated material.

| | longitudinal % | transversal % |
|---|---|---|
| Type 1: | 84 | 87 |
| Type 2: | 80 | 81 |

EXAMPLE 6:

Further test pieces drawn from the same manufactured articles were subjected to sudden cooling down by immersion into liquid air at about 80°K and allowed to cool down for about 10 minutes. At the end of the tests numerous fragments of impermeabilizing mix were recovered on the bottom of the liquid container, while the extracted test pieces, before covering themselves up with hoarfrost,showed all surfaces finely fissured (cracked) caused by shrinking. All attempts to detach the polymeric mass from the weave proved vain since the single fragments obtained contain always the weave itself.

**Claims**

1. A process for the preparation of impermeabilizing membranes incorporating a weave of reinforcing glass fibres, and consisting of the following operations in the given order:

(a) preparation of a mat of glass filaments obtained by dropping from above, on a horizontally moving surface, and with a dropping speed greater than the transverse speed of said surface, sized glass filaments, with a falling movement of spirallike shape.

(b) deposition onto the mat of an impermeabilizing material in a liquid state, with the consequent substantial impregnation of the mat.

(c) solidification of the impermeabilizing material.

2. A process according to claim 1, characterized in that the size is based on carboxylated polypropylene or on a styrene polymer.

3. A process according to either claim 1 or 2, characterized in that the impermeabilizing material consists of or includes bitumen.

FIG. 1

0 193 846

FIG. 2

0 193 846